# EUROPEAN PATENT SPECIFICATION

(11) **EP 1 844 990 B1**
(45) Date of publication and mention of the grant of the patent: **01.02.2012**
(21) Application number: 07007400.0
(22) Date of filing: 11.04.2007
(51) Int. Cl.: B60R 21/13

(54) **Crush protection device for agricultural machines**
Einklemmschutzvorrichtung für landwirtschaftliche Maschinen
Disposition de protection de sécurité pour machines agricoles

(30) Priority: 11.04.2006 IT PE20060010
(43) Date of publication of application: 17.10.2007
(73) Proprietor: D'Eusanio S.n.c., 66010 Tollo CH (IT)
(72) Inventor: Cataldo, Adina, 66010 Tollo (Chieti) (IT)
(74) Representative: Simino, Massimo

(56) References cited:
- DE-A1- 4 208 887
- DE-A1- 4 307 963
- DE-C1- 19 755 040
- DE-C1- 19 916 678
- US-A- 4 666 183
- BAUMANN K H ET AL: "THE RAISABLE ROLL-OVER BAR OF THE NEW MERCEDES-BENZ ROADSTER" VERHICLE ELCTRONICS IN THE 90'S. DEARBORN, OCT. 15 - 17, 1990, PROCEEDINGS OF THE INTERNATIONAL CONGRESS ON TRANSPORTATION ELECTRONICS, NEW YORK, IEEE, US, 1 October 1990 (1990-10-01), pages 55-64, XP000223536 ISBN: 1-56091-047-X

## Description

The present invention addresses a crush protection safety device for agricultural machines according to the preamble of claim 1. More particularly, the invention relates to a safety device for use on agricultural machines such as tractors and the like, to protect the driver in case of rollover of the agricultural means. This device can be also used on operating machines such as excavators, cranes and the like.

For simplicity, reference will be made herein, without limitation, to a tractor as an agricultural machine.
In tractor design, the need has been strongly felt to protect the operator on the tractor even in case of rollover. As a result, crush protection devices are currently widely used, which comprise a crush protection bar, also known as roll bar, for protecting the operator on the tractor in case of rollover of the tractor. The structure of the driver's cab, if any, has not a sufficient size to support the whole weight of the tractor in case of rollover.

This problem is addressed by the above mentioned roll bar, whose vision-limiting presence is undesired by operators. Furthermore, the provision of a roll bar increases the height of the tractor and makes it more difficult to accommodate it in a closed space or to drive it through rows or low-trunk trees. It shall be further noted that in small tractors without cab, the presence of a roll bar also considerably increases the tractor's height.

To obviate the drawbacks resulting from the provision of a roll bar even when the tractor operates in conditions that do not require the use of a crush protection safety device, the roll bar is arranged to be movable between a non-operating retracted rest position and an operating position in which the roll bar is raised to a suitable operator protecting position in case of accidental rollover of the tractor, e.g. caused by an excessive slope of the ground. The motion of the roll bar from the retracted rest position to the raised operating position, and vice versa, is controlled by special drive means, to avoid any effort by the operator.

These drive means generally include hydraulic actuators, which utilize the oil circuit of the tractor to control roll bar motion.

While this solution is effective in providing safety when the roll bar is in the raised operating condition and convenience for the possibility of driving the roll bar to its retracted rest position when the tractor operates in conditions that do not involve any rollover danger, such as on asphalted roads or level ground, operators often do not arm the roll bar even when they drive in difficult conditions, such as on steep ground. This may be caused either by underestimation of the danger of tractor operating conditions, especially when carrying heavy overhanging accessories or containers, or by negligence, with the operator intentionally omitting to arm the roll bar.

Baumann K. H. et al: "The raisable roll-over bar of the new Mercedes Benz roadster", vehicle electronics in the 90's. Dearborn, Oct. 15-17, 1990, Proceedings of the international congress on transportation electronics, New York, IEEE, US, 1 October 1990 (1990-10-01), pages 55-64, XP000223536, discloses a generic crush protection device for a vehicle comprising a roll-over bar movable from a horizontal rest position to a support position either automatically or manually, a spring/damper unit for ensuring the motion of the roll-over bar, an actuation system for detecting a danger signal which represents the angle between the vehicle and the road surface and rear axle switches for detecting the state of the suspension of at least one real wheel. The roll-over bar is triggered if either of two rear axle switches is opened due to full suspension rebound of a rear wheel, combine either a steady-state vehicle inclination of proximally 22° or a corresponding dynamic acceleration in the x-y plane of 0.4 g.

DE 197 55 040 C1 discloses a crush protection device for a vehicle comprising a roll bar 3 pivoted between a lowered position and a raised working position, a locking device 7 for securing the roll bar in its working position, drive means for raising up the roll-bar 3, and a command block 11 comprising an inclination sensor of the vehicle associated to the drive means 14 in order to raises up the roll-bar 3. In particular, the drive means comprising a mechanic spring 6 and a double acting hydraulic cylinder 14 which, by means of a mechanic articulation 12, is connected to the roll-bar 3. Two hydraulic lines 15,16 produce the command signal for raising up the roll-bar 3 wherein are connected to an hydraulic pump of the command block 11.

The mechanic articulation 12 is connected through a releasing magnet 13 to the hydraulic cylinder 14 wherein the releasing magnet 13 is released according to the signals generated by the inclination sensor. For obtaining the pivot of the roll-bar 3 from the lowered position to the raised working position, the mechanic articulation 12 is separated from the hydraulic cylinder 14 so the roll-over bar 3 is raised up by the mechanic spring 6 in a quickly way. A block tooth 8 removably connected to roll-bar 3 allows to the roll-bar 3 to remain in the raised working position.

On the other hand, for obtaining the pivot of the roll-bar 3 from the raised working position to the lowered position, the command block 11 re-establishes the connection between the mechanic articulation 12 and the hydraulic cylinder 14 by the releasing magnet 13. The hydraulic pump of the command block 11 controls simultaneously the hydraulic line 15 of the hydraulic cylinder 14 and the hydraulic line 10 of the cylinder hydraulic 9 so that the block tooth 8 is unblocked and the roll-bar 3 is pivoted down by the mechanic articulation 12 thanks to the double acting hydraulic cylinder 14.

US 4666183 discloses an agricultural machine having a rollover bar comprising an actuating device unlocked by a control pulse when a critical travel situation occurs. The rollover can be also actuated manually by the driver. The rollover bar can be moved from a storage position into a protective position. The rollover bar comprises an un-lockable supporting device which prevents movement of the rollover bar towards the storage position and a selectively controllable adjustment device which is used to set the rollover bar to its protective position with some delay.

This invention is based on the issue of providing a crush protection safety device for agricultural machines, which has such structural and functional features as to fulfilling the above requirement of protecting the operator on the agricultural machine even in case of rollover of such agricultural machine.
This issue is addressed by a crush protection safety device for agricultural machines according to the features of claim 1.

Further features and advantages of the crush protection safety device for agricultural machines of this invention, will be apparent upon reading the following description of one preferred embodiment thereof, which is given by way of illustration and without limitation with reference to the accompanying figures, in which:
- Figure 1 is a simplified perspective view of the crush protection safety device for agricultural machines in the lowered rest configuration;
- Figure 2 is a simplified perspective view of the crush protection safety device of Figure 1 in the raised operating configuration;

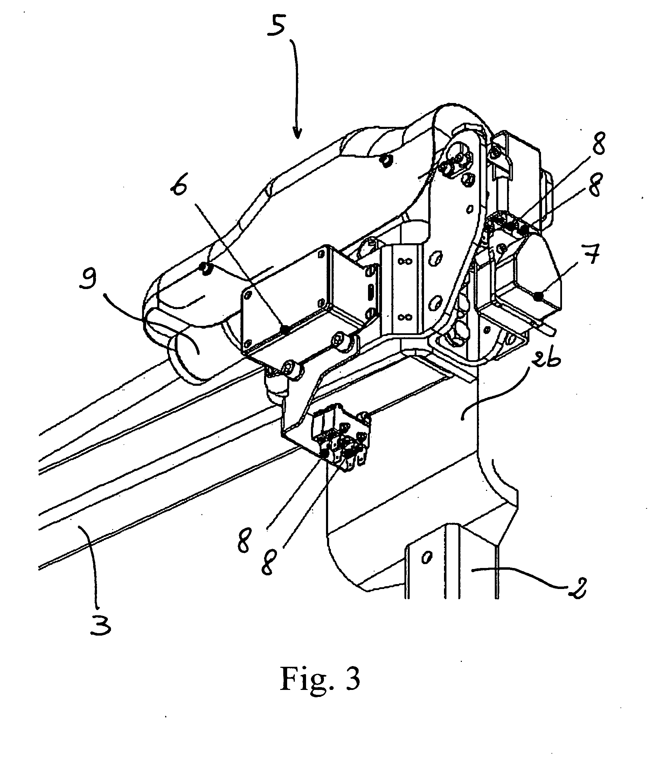

- Figure 3 is a perspective view of a detail of the crush protection safety device of Figure 1;

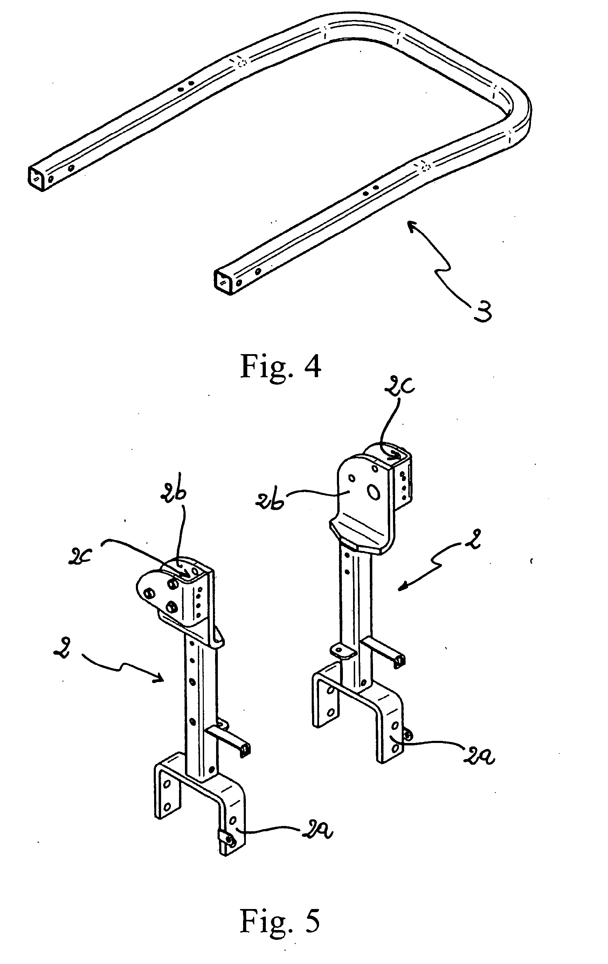

- Figure 4 is a perspective view of a detail of the movable part in the support structure of the crush protection safety device of Figure 1;
- Figure 5 is a perspective view of a detail of the stationary part in the support structure of the crush protection safety device of Figure 1;
- Figure 6 shows the safety device of Figure 1 mounted on board of a tractor (drawn in thin lines) and
- Figure 7 shows the safety device of Figure 2 mounted on board of a tractor (drawn in thin lines).

Referring to the accompanying figures, numeral 1 generally designates a crush protection safety device for agricultural machines of the invention.

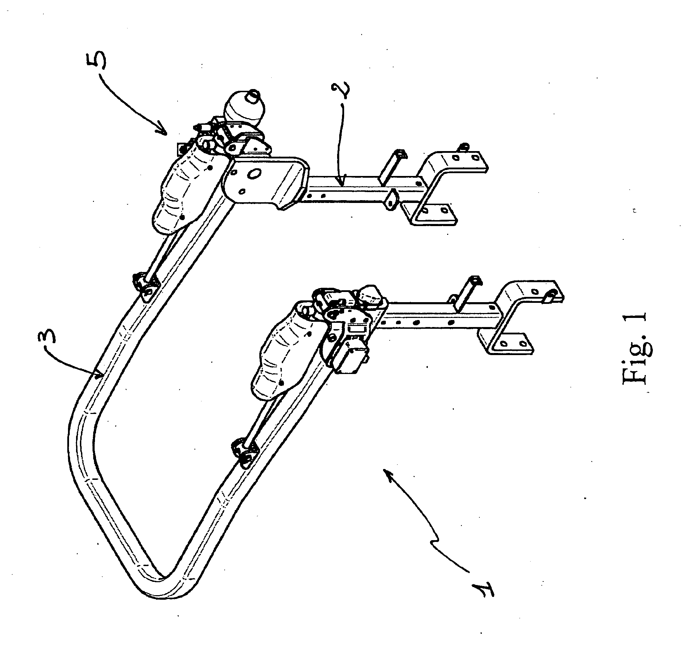

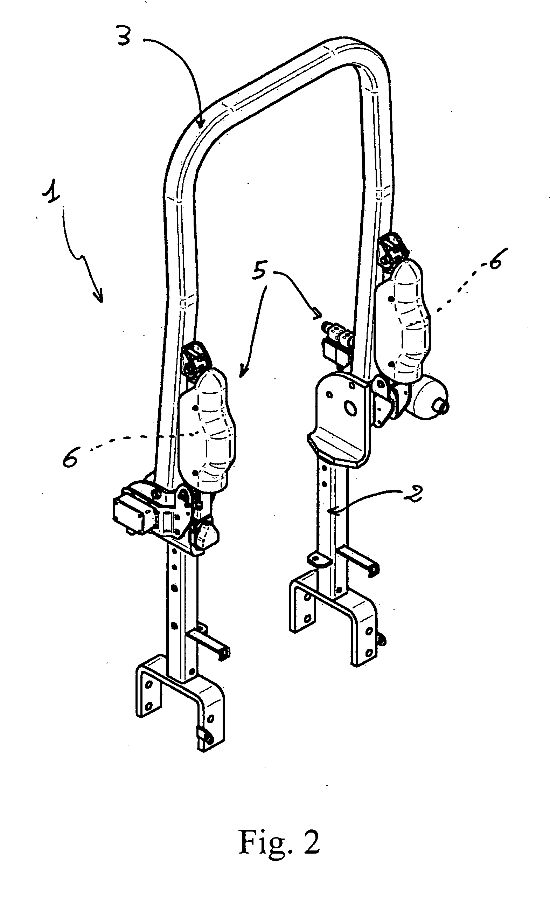

The safety device 1 comprises a support structure having a stationary part 2 designed to be integrally fixed to the frame of an agricultural machine and a movable part 3 connected to the stationary part 2 to reversibly move from a retracted rest position (Fig. 1) to a raised operating position (Fig. 2), in which it forms a roll bar adapted to protect an operator on the agricultural machine.

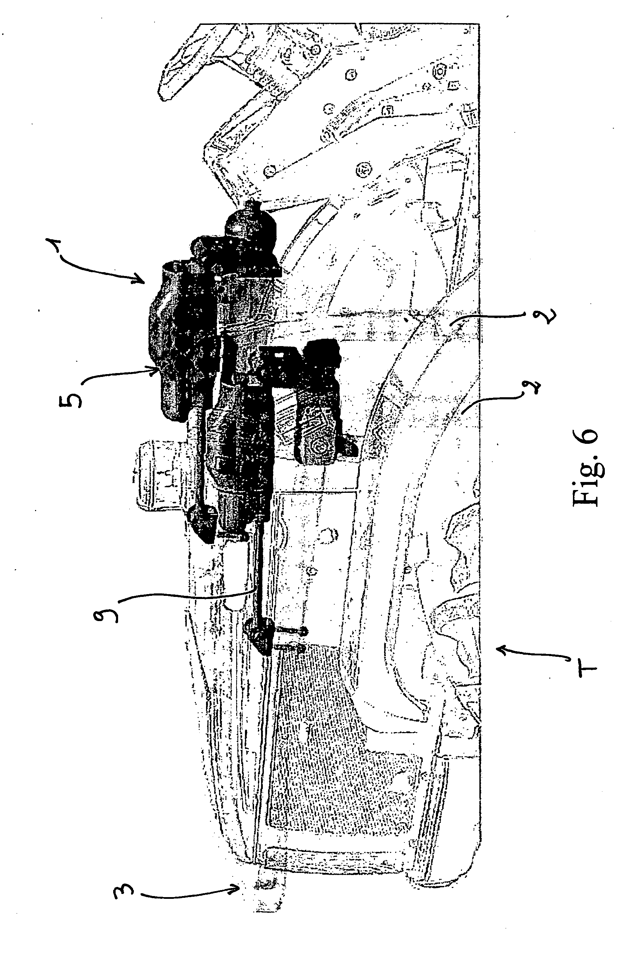

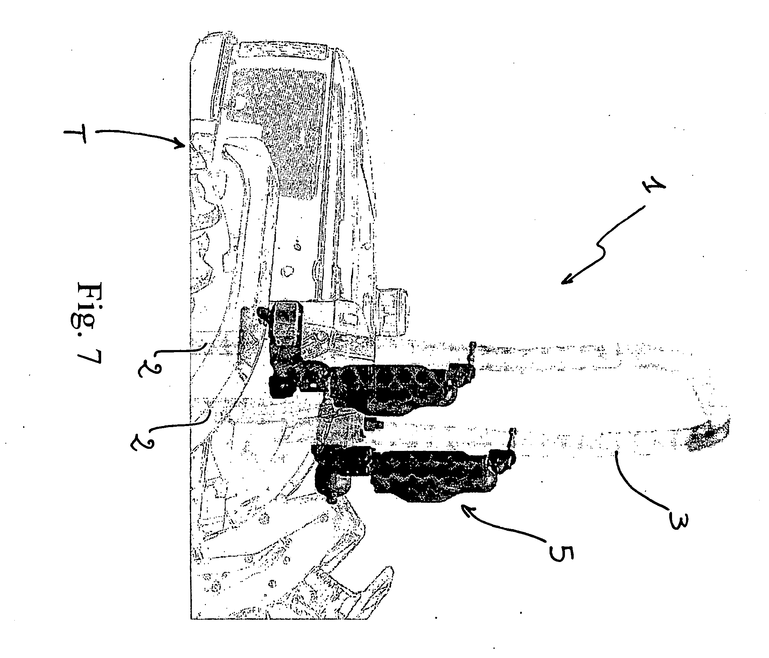

In the example of Figures 6 and 7, the agricultural machine is a tractor T, more specifically a tractor having no driver's cab. In such Figures 6 and 7, the tractor is drawn in thin lines to better show the mode in which the device 1 is mounted on board of the tractor, without hiding the safety device 1.

The movable part 3 of the support structure of the safety device 1 comprises a tubular steel bar of suitable thickness which is bent into a U shape. At the free ends of the U shape, the tubular bar is connected to the stationary part 2 of the support structure to be articulated relative thereto. More specifically, the free ends of the U shape are hinged at 4 to a corresponding end portion of the stationary part 2.

The stationary part 2 comprises two opposed tubular elements, each having a lower end 2a of such a shape as to define a fork-like bracket to be fastened by bolt connection to a cross member of the frame of the tractor T and an opposite upper end terminating in a plate 2b for providing articulated connection with a respective free end of the U shape of the movable part 3.

It should be noted that the plate 2b defines a limit stop 2c for stopping rotation of the movable part 3 of the support structure relative to the stationary part 2 until reaching the above mentioned raised operating position (Figs. 2 and 7).

The device 1 comprises drive means 5 which are operably associated to the support structure to ensure motion of the movable part 3 relative to the stationary part 2 and to keep said movable part in said raised operating position (Figures 2 and 7).

Preferably, the drive means 5 include fluid actuators 9 connected to a fluid circuit.

The fluid circuit comprises a pneumatic accumulator for imparting the required high pressure to the fluid in the circuit as the movable part 3 of the support structure is driven from the retracted rest position (Figs. 1 and 6) to the raised operating position (Figures 2 and 7).

Preferably, the fluid in such fluid circuit is oil and the fluid pneumatic accumulator is an oil/gas membrane accumulator. Preferably, the gas used is nitrogen, wherefore the fluid pneumatic accumulator is an oil/nitrogen membrane accumulator.

The above mentioned fluid pneumatic accumulator has a fluid pressure limiting valve for device safety.
The fluid circuit of the safety device 1 advantageously comprises a two-position four-way double acting solenoid valve, with the four chambers being pressure balanced.

Here, the fluid actuators 9 are of the double acting piston/cylinder type.

Advantageously, the two fluid actuators 9 which actuate the movable part 3 of the roll bar supporting structure have a particular construction with the following peculiar features:
- internally polished construction with a diameter tolerance value of 17;
- chrome plated "C40" steel rod;
- monobloc piston incorporating a turrite piston ring, and a dynamic PTFE seal (bronze filled Teflon) with a special O-ring in its cavity, capable of withstanding high displacement speeds and
- damping means for damping the kinetic energy of the piston upon reaching of the above mentioned raised operating position (Figs. 2 and 7) of the movable part 3 of the support structure.

Essentially, the particular damping system of each cylinder of the fluid actuators 9 is actuated as the roll bar, i.e. the movable part 3 of the support structure, is about to reach the limit stop end corresponding to the raised operating position (Figs. 2 and 7) of the movable part 3, to damp the kinetic energy accumulated during the linear stroke, under adiabatic compression by the fluid and thanks to the presence of the fluid pneumatic accumulator.

With reference to the fluid pneumatic membrane accumulator of the oil/nitrogen type, it should be noted that it is precharged with a nitrogen pressure of about 50 bar and is protected by its pressure limiting and quick-release valve on the oil side, directly allocated on the duralumin oil block.

By precharging the fluid pneumatic accumulator, a very high self-triggering response is obtained, which provides nearly instantaneous arming of the roll bar, i.e. of the movable part 3, from the retracted rest position (Figs. 1 and 6) to the raised operating position (Figures 2 and 7).

It shall be further noted that the above two-position, four-way double acting solenoid valve, with the four chambers being pressure balanced, provides immediate excitation response when, as better explained hereafter, such response is required by level sensors.

The solenoid valve opening time from fully closed to fully open positions is of twenty-five milliseconds only.

Advantageously, the safety device 1 of this invention comprises detection means for detecting a signal representing the tilt value of the stationary part 2 of the support structure as well as adjustment and control means for:
- receiving such signal and
- controlling the drive means according to such signal when the tilt value of such stationary part 2 of the support structure is out of a predetermined range of tilt values.

Preferably, the adjustment and control means comprise an electronic control unit 6 and a plurality of micro-switches 8 which are operably associated to the support structure to be driven by the movable part 3 of the support structure or by parts connected thereto, as the movable part 3 reaches predetermined positions.

Conveniently, the detection means include at least one tilt meter 7. Nevertheless, according to a preferred embodiment, the device 1 of the invention includes a first tilt meter 7 for detecting tilt angle values of the stationary part 2 of the support structure in a first direction and a second tilt meter 7 for detecting tilt angle values of the stationary part 2 of said support structure in a second direction other than said first direction.

Advantageously, the first direction and the second direction are selected to coincide with the longitudinal and transverse directions respectively, relative to the tractor T.

Preferably, the first tilt meter 7 and the second tilt meter 7 allow to make different adjustments to generate respective different signals according to different predetermined ranges of tilt angle values.

The adjustment and control means include timer means for generating an actuation signal for a predetermined time, said signal being generated upon termination of an excessive tilt condition of said stationary part of said structure, as detected by said detection means, said adjustment and control means being adapted to receive said actuation signal and to control said drive means to keep said movable part of said structure in said raised operating position.

In view of the above, the detection means, i.e. the tilt meters, transmit a signal to the electronic control unit 6 of the adjustment and control means, which signal is a function of the longitudinal or transverse tilt of the stationary part 2 of the support structure, which corresponds to the tractor tilt. As long as these values are within a predetermined range of values, such as from -30° to +25° for longitudinal tilt or from -15° to +15° for transverse tilt, the electronic control unit 6 is not operative. Otherwise, when the signal received by the electronic control unit 6 is out of the predetermined range of values, the electronic control unit 6 operates to drive the actuator means 5, more specifically the fluid actuators 9, thereby causing the movable part 3 of the support structure to move from the retracted rest position (Figs. 1 and 6) to the raised operating position (Figures 2 and 7), in which the movable part 3 is locked to form an effective crush protection roll bar.
Particularly, the electronic control unit 6 operates on the solenoid valve of the hydraulic circuit, so that the fluid pressurized by the precharged fluid pneumatic accumulator causes a quick adiabatic shift of the movable part 3 from the retracted rest position to the raised operating position.

The present invention provides a kit of electro-oleo-mechanical components to be installed on board of any tractor, either new at the factory or already used, thereby protecting it against any rollover that might cause injuries to the driver.

In other words, longitudinal and transverse electric sensors will be installed on the agricultural machine, to establish an operation threshold for a hydraulic solenoid valve which will actuate two hydraulic cylinders, to cause the movable part 3 of the support structure, i.e. the roll bar, to quickly move from the retracted rest position to the raised operating position, thereby protecting the driver in case of rollover

As set forth above, the kit comprises the following:
a) 1 analog or electromechanical on/off level sensor to sense the level of the stationary part 2 of the support structure, hence of the tractor T, in the longitudinal direction;
b) 1 analog or electromechanical on/off level sensor to sense the level of the stationary part 2 of the support structure, hence of the tractor T, in the transverse direction;
c) 1 electromechanical panel in a watertight case, containing 1 electronic stabilizer for power supply to the two level sensors, a hydraulic valve control relay and the prewired control logic for ensuring proper operation of the safety device.
d) 1 hydraulic valve block made of aluminum alloy, containing the following hydraulic components:
   - 1 pressure limiting valve, pos. 1
   - 1 one-way check valve, pos. 2
   - 1 DC powered (12 or 24 VDC) high flow and quick response two-position, four-way cartridge valve, pos. 3
   - 1 nitrogen-precharged hydropneumatic membrane accumulator, pos. 4
   - 1 quick-release safety valve for controlling the accumulator, pos. 5
e) 2 ultra-low friction, double acting hydraulic cylinders, each having its own deceleration valve incorporated on the front limit stop abutment corresponding to the limit stop that is reached when the movable part 3 of the support frame is on the raised operating position.

### OPERATION PRINCIPLE

First, when the tractor T is driven on an essentially flat surface, whose planarity or tilt angle is within the range of the two analog or on-off electric sensors (with presettable thresholds), the safety device 1 will hold the movable part 3 of the support structure in the retracted rest position, as sensors do not transmit a signal corresponding to a possible rollover of the tractor T to the electronic control unit 6. Meanwhile, using the electromechanical/electronic logic, the hydraulic circuit on the tractor T will precharge the nitrogen/oil fluid pneumatic accumulator until the preset pressure value is attained on the oil side. As a result, the fluid pneumatic accumulator is ready to operate as requested by the system.

As soon as the electronic control unit 6 receives an electric signal from one or both electric tilt sensors, representing a tilt state that falls out of the predetermined range of values, for instance because the machine has exceeded the safety tilt angle, the hydraulic solenoid valve of the hydraulic circuit is immediately triggered by the electronic control unit 6 and the fluid cylinders are thus actuated. Therefore, the roll bar defined by the movable part 3 of the support structure quickly moves to the raised operating position, to protect the driver against any rollover and crush danger.

This armed roll bar state is maintained for a certain time, until the sensor values fall again within the sensor tolerance range, thereby causing the roll bar to be automatically retracted into the zero position. Advantageously, the above mentioned timer means delay retraction of the movable part 3 of the support structure from the raised operating position (Figures 2 and 7) to the retracted rest position (Figures 1 and 6) by a predetermined time, to prevent repeated arming and disarming of the device as the operating conditions of the agricultural machine change, e.g. when driving through a succession of alternate steep and substantially flat ground sections.

Referring to the tilt sensors, it shall be noted that, whether of analog or on-off design, they are mounted on board of the support structure through a particular antivibration stabilizer device (to prevent false arming caused by vibrations or shocks) and with a stable electric tolerance range. Thus, they ensure high reliability and prevent any undesired actuation of the roll bars 2 caused by holes or local asperities on the ground, which are not accounted for thereby. Furthermore, abnormal operation signals are transmitted to the electric control panel of the safety device.

As clearly shown in the above description, the crush protection safety device for agricultural machines of this invention fulfills the above mentioned need and also obviates prior art drawbacks as set out in the introduction of this disclosure. Such device may be mounted on board of any agricultural machine or the like to automatically and quickly arm the roll bar, by moving it into a raised operating position from a retracted rest position, when a condition of possible rollover of the agricultural machine is detected.
A further advantage of the crush protection safety device for agricultural machines of this invention consists in the possibility of also installing the device on existing agricultural machines or the like.
Yet another advantage of the crush protection safety device for agricultural machines of this invention consists in the exceptional structural and operational simplicity of the device, ensuring proper operation thereof for a long time.

Those skilled in the art will obviously appreciate that a number of changes and variants may be made to the crush protection safety device for agricultural machines as described hereinbefore, without departure from the scope of the invention, as defined in the following claims.

Thus, for example, the roll bar may also have a different shape from that described herein, e.g. a L-shape, a curvilinear shape or others.
Moreover, the crush protection safety device for agricultural machines may be placed behind and not before the operator.

## Claims

1. A crush protection safety device for agricultural machines (T), comprising:
- a support structure having a stationary part (2) designed to be integrally fixed to the frame of an agricultural machine and a movable part (3) connected to the stationary part (2) to reversibly move from a retracted rest position to a raised operating position, in which it forms a roll bar adapted to protect an operator on the agricultural machine (T) and
- drive means (5) which are operably associated to said support structure to ensure motion of said movable part (3) relative to said stationary part (2) and to keep said movable part (3) in said raised operating position,
- detection means (7) for detecting a signal which represents the tilt value of the stationary part (2) of said support structure and adjustment and control means for receiving said signal and controlling said drive means (5) according to said signal, when the tilt value of said stationary part (2) of said support structure is out of a predetermined range of tilt values,
wherein said drive means (5) include fluid actuators (9) connected to a fluid circuit,
said crush protection safety device being **characterized in that** the fluid circuit comprises a fluid pneumatic accumulator for applying the required high pressure to the fluid during as the movable part (3) of the support structure is driven from the retracted rest position to the raised operating position.

2. A safety device as claimed in claim 1, wherein the fluid is oil and said fluid pneumatic accumulator is a membrane accumulator.

3. A safety device as claimed in claim 1 or 2, wherein the fluid is oil and said fluid pneumatic accumulator is an oil/gas accumulator.

4. A safety device as claimed in claim 3, wherein the fluid is oil and said fluid pneumatic accumulator is an oil/nitrogen accumulator.

5. A safety device as claimed in any one of claims 1 to 4, wherein said fluid pneumatic accumulator is fitted with a fluid pressure limiting valve.

6. A safety device as claimed in any one of claims 1 to 5, wherein said fluid circuit comprises a two-position four-way double acting solenoid valve, with the four chambers being pressure balanced.

7. A safety device as claimed in any one of claims 1 to 6, wherein said fluid actuators are of the double acting piston/cylinder type.

8. A safety device as claimed in claim 7, wherein each double acting piston/cylinder comprises damping means for damping the kinetic energy of the piston upon reaching of the above mentioned raised operating position of the movable part (3) of the support structure.

9. A safety device as claimed in any one of claims 1 to 8, wherein said adjustment and control means include an electronic control unit (6).

10. A safety device as claimed in any one of claims 1 to 9, wherein said adjustment and control means include micro-switches (8) which are operably associated to said support structure to be driven as predetermined positions are reached.

11. A safety device as claimed in any one of claims 1 to 10, wherein said detection means include at least one tilt meter (7).

12. A safety device as claimed in claim 11, comprising a first tilt meter (7) for detecting tilt angle values of said stationary part (2) of said support structure in a first direction and a second tilt meter (7) for detecting tilt angle values of said stationary part (2) of said structure in a second direction other than said first direction.

13. A safety device as claimed in claim 12, wherein said first tilt meter (7) and said second tilt meter (7) can be adjusted to generate respective different signals according to different predetermined ranges of tilt angle values.

14. A safety device as claimed in any one of claims 1 to 13, wherein said adjustment and control means include timer means for generating an actuation signal for a predetermined time, said signal being generated upon termination of an excessive tilt condition of said stationary part (2) of said structure, as detected by said detection means, said adjustment and control means being adapted to receive said actuation signal and to control said drive means to keep said movable part (3) of said structure in said raised operating position.

15. A safety device as claimed in any one of claims 1 to 14, wherein said detection are mounted on the support structure through an antivibration device.

16. Agricultural machine (T) having a compartment for an operator and a front portion which is positioned before said compartment, wherein said agricultural machine comprises a crush protection safety device according to any one of claims 1 to 15, whereby
- said movable part is positioned on said front portion of the agricultural machine (T) when said movable part (3) of said support structure is in said retracted rest position.

## Patentansprüche

1. Einklemmschutzvorrichtung für landwirtschaftliche Maschinen (T), die Folgendes umfasst:
- eine Tragkonstruktion mit einem unbeweglichen Teil (2), der dazu bestimmt ist, fest am Rahmen einer landwirtschaftlichen Maschine befestigt zu werden, und einem beweglichen Teil (3), der mit dem unbeweglichen Teil (2) so verbunden ist, dass er sich reversibel aus einer eingeklappten Ruhestellung in eine angehobene Arbeitsstellung bewegt, in der er einen Überrollbügel bildet, der geeignet ist, einen Fahrer auf der landwirtschaftlichen Maschine (T) zu schützen, und
- Antriebsmittel (5), die betriebsfähig mit der Tragkonstruktion verbunden sind, um die Bewegung des beweglichen Teils (3) relativ zum unbeweglichen Teil (2) zu bewirken und den beweglichen Teil (3) in der angehobenen Arbeitsstellung zu halten,
- Detektionsmittel (7) zum Detektieren eines Signals, das den Wert der Neigung des unbeweglichen Teils (2) der Tragkonstruktion darstellt, und Einstell- und Steuermittel zum Empfangen dieses Signals und zum Steuern der Antriebsmittel (5) entsprechend diesem Signal, wenn der Wert der Neigung des unbeweglichen Teils (2) der Tragkonstruktion außerhalb eines vorbestimmten Bereichs von Neigungswerten liegt,
wobei die Antriebsmittel (5) Fluidaktoren (9) umfassen, die an einen Fluidkreislauf angeschlossen sind,
wobei diese Einklemmschutzvorrichtung **dadurch gekennzeichnet ist, dass** der Fluidkreislauf einen fluid-pneumatischen Speicher umfasst, um das Fluid mit dem erforderlichen hohen Druck zu beaufschlagen, während der bewegliche Teil (3) der Tragkonstruktion aus der eingeklappten Ruhestellung in die angehobene Arbeitsstellung getrieben wird.

2. Sicherheitsvorrichtung nach Anspruch 1, bei der das Fluid Öl ist und der fluid-pneumatische Speicher ein Membranspeicher ist.

3. Sicherheitsvorrichtung nach Anspruch 1 oder 2, bei der das Fluid Öl ist und der fluid-pneumatische Speicher ein Öl-Gas-Speicher ist.

4. Sicherheitsvorrichtung nach Anspruch 3, bei der das Fluid Öl ist und der fluid-pneumatische Speicher ein Öl-Stickstoff-Speicher ist.

5. Sicherheitsvorrichtung nach einem der vorherigen Ansprüche 1 bis 4, bei welcher der fluid-pneumatische Speicher mit einem Ventil zur Begrenzung des Drucks des Fluids versehen ist.

6. Sicherheitsvorrichtung nach einem der vorherigen Ansprüche 1 bis 5, bei welcher der Fluidkreislauf ein doppelt wirkendes 4-Wege-Magnetventil mit zwei Schaltstellungen umfasst, bei dem die vier Kammern druckausgeglichen sind.

7. Sicherheitsvorrichtung nach einem der vorherigen Ansprüche 1 bis 6, bei der die Fluidaktoren vom Typ doppelt wirkender Kolben/Zylinder sind.

8. Sicherheitsvorrichtung nach Anspruch 7, bei der jeder doppelt wirkende Kolben/Zylinder Dämpfungsmittel zum Dämpfen der kinetischen Energie des Kolbens bei Erreichen der oben genannten angehobenen Arbeitsstellung des beweglichen Teils (3) der Tragkonstruktion umfasst.

9. Sicherheitsvorrichtung nach einem der vorherigen Ansprüche 1 bis 8, bei der die Einstell- und Steuermittel eine elektronische Steuereinheit (6) umfassen.

10. Sicherheitsvorrichtung nach einem der vorherigen Ansprüche 1 bis 9, bei der die Einstell- und Steuermittel Mikroschalter (8) umfassen, die derart betriebsfähig mit der Tragkonstruktion verbunden sind, dass sie betätigt werden, wenn vorbestimmte Stellungen erreicht werden.

11. Sicherheitsvorrichtung nach einem der vorherigen Ansprüche 1 bis 10, bei der die Detektionsmittel mindestens einen Neigungsmesser (7) umfassen.

12. Sicherheitsvorrichtung nach Anspruch 11, die einen ersten Neigungsmesser (7) zum Detektieren von Neigungswinkelwerten des unbeweglichen Teils (2) der Tragkonstruktion in einer ersten Richtung und einen zweiten Neigungsmesser (7) zum Detektieren von Neigungswinkelwerten dieses unbeweglichen Teils (2) dieser Konstruktion in einer von der ersten Richtung verschiedenen zweiten Richtung umfasst.

13. Sicherheitsvorrichtung nach Anspruch 12, bei welcher der erste Neigungsmesser (7) und der zweite Neigungsmesser (7) so eingestellt werden können, dass sie in Übereinstimmung mit unterschiedlichen vorbestimmten Bereichen von Neigungswinkelwerten entsprechende unterschiedliche Signale erzeugen.

14. Sicherheitsvorrichtung nach einem der vorherigen Ansprüche 1 bis 13, bei der die Einstell- und Steuermittel Zeitmessmittel zum Erzeugen eines Betätigungssignals für eine vorbestimmte Zeit umfassen, wobei dieses Signal bei Beendigung eines übermäßigen Neigungszustands des unbeweglichen Teils (2) der Konstruktion erzeugt wird, wenn sie von den Detektionsmitteln detektiert wird, wobei die Einstell- und Steuermittel geeignet sind, dieses Betätigungssignal zu empfangen und die Antriebsmittel so zu steuern, dass sie den beweglichen Teil (3) der Konstruktion in der angehobenen Arbeitsstellung halten.

15. Sicherheitsvorrichtung nach einem der vorherigen Ansprüche 1 bis 14, bei der die Detektionsmittel mit Hilfe einer Schwingungsdämpfungseinrichtung auf die Tragkonstruktion montiert sind.

16. Landwirtschaftliche Maschine (T), die einen Fahrerplatz und einen vorderen Bereich aufweist, der vor diesem Fahrerplatz angeordnet ist, wobei diese landwirtschaftliche Maschine eine Einklemmschutzvorrichtung nach einem der Ansprüche 1 bis 15 umfasst, wobei der bewegliche Teil auf diesem vorderen Bereich der landwirtschaftlichen Maschine (T) angeordnet ist, wenn sich der bewegliche Teil (3) der Tragkonstruktion in der eingeklappten Ruhestellung befindet.

## Revendications

1. Dispositif de sécurité de protection contre les écrasements pour des machines agricoles (T), comprenant :
- une structure de support ayant une partie stationnaire (2) conçue pour être intégralement fixée au châssis d'une machine agricole et une partie mobile (3) reliée à la partie stationnaire (2) pour passer de façon réversible d'une position de repos rétractée à une position opérationnelle surélevée, dans laquelle elle forme un arceau de sécurité adapté pour protéger un opérateur sur la machine agricole (T) et
- des moyens d'entraînement (5) qui sont opérationnellement associés à ladite structure de support pour assurer le mouvement de ladite partie mobile (3) par rapport à ladite partie stationnaire (2) et pour maintenir ladite partie mobile (3) dans ladite position opérationnelle surélevée,
- des moyens de détection (7) pour détecter un signal qui représente la valeur d'inclinaison de la partie stationnaire (2) de ladite structure de support et des moyens de réglage et de commande pour recevoir ledit signal et commander lesdits moyens d'entraînement (5) selon ledit signal, lorsque la valeur d'inclinaison de ladite partie stationnaire (2) de ladite structure de support est en dehors d'une plage prédéterminée de valeurs d'inclinaison,
où lesdits moyens d'entraînement (5) incluent des actionneurs à fluide (9) reliés à un circuit de fluide,
ledit dispositif de sécurité de protection contre les écrasements étant **caractérisé en ce que** le circuit de fluide comprend un accumulateur pneumatique de fluide pour appliquer la haute pression requise au fluide pendant que la partie mobile (3) de la structure de support est entraînée de la position de repos rétractée à la position opérationnelle surélevée.

2. Dispositif de sécurité tel que revendiqué à la revendication 1, où le fluide est de l'huile et ledit accumulateur pneumatique de fluide est un accumulateur à membrane.

3. Dispositif de sécurité tel que revendiqué à la revendication 1 ou 2, où le fluide est de l'huile et ledit accumulateur pneumatique de fluide est un accumulateur d'huile/gaz.

4. Dispositif de sécurité tel que revendiqué à la revendication 3, où le fluide est de l'huile et ledit accumulateur pneumatique de fluide est un accumulateur d'huile/azote.

5. Dispositif de sécurité tel que revendiqué dans une quelconque des revendications 1 à 4, où ledit accumulateur pneumatique de fluide est équipé d'une vanne de limitation de la pression du fluide.

6. Dispositif de sécurité tel que revendiqué dans une quelconque des revendications 1 à 5, où ledit circuit de fluide comprend une électrovanne à double effet à deux positions et quatre voies, avec les quatre chambres étant équilibrées par pression.

7. Dispositif de sécurité tel que revendiqué dans une quelconque des revendications 1 à 6, où lesdits actionneurs à fluide sont du type à piston/cylindre à double effet.

8. Dispositif de sécurité tel que revendiqué à la revendication 7, où chaque piston/cylindre à double effet comprend des moyens d'amortissement pour amortir l'énergie cinétique du piston atteignant la position opérationnelle surélevée susmentionnée de la partie mobile (3) de la structure de support.

9. Dispositif de sécurité tel que revendiqué dans une quelconque des revendications 1 à 8, où lesdits moyens de réglage et de commande incluent une unité de commande électronique (6).

10. Dispositif de sécurité tel que revendiqué dans une quelconque des revendications 1 à 9, où lesdits moyens de réglage et de commande incluent des micro-interrupteurs (8) qui sont opérationnellement associés à ladite structure de support à entraîner tandis que des positions prédéterminées sont atteintes.

11. Dispositif de sécurité tel que revendiqué dans une quelconque des revendications 1 à 10, où lesdits moyens de détection incluent au moins un indicateur d'inclinaison (7).

12. Dispositif de sécurité tel que revendiqué à la revendication 11, comprenant un premier indicateur d'inclinaison (7) pour détecter des valeurs d'angle d'inclinaison de ladite partie stationnaire (2) de ladite structure de support dans une première direction et un second indicateur d'inclinaison (7) pour détecter des valeurs d'angle d'inclinaison de ladite partie stationnaire (2) de ladite structure dans une seconde direction autre que ladite première direction.

13. Dispositif de sécurité tel que revendiqué à la revendication 12, où ledit premier indicateur d'inclinaison (7) et ledit second indicateur d'inclinaison (7) peuvent être réglés pour générer des signaux respectifs différents selon différents plages prédéterminées de valeurs d'angle d'inclinaison.

14. Dispositif de sécurité tel que revendiqué dans une quelconque des revendications 1 à 13, où lesdits moyens de réglage et de commande incluent des moyens de temporisation pour générer un signal d'actionnement pour une durée prédéterminée, ledit signal étant généré à la fin d'une condition d'inclinaison excessive de ladite partie stationnaire (2) de ladite structure, telle que détectée par lesdits moyens de détection, lesdits moyens de réglage et de commande étant adaptés pour recevoir ledit signal d'actionnement et pour commander lesdits moyens d'entraînement afin de maintenir ladite partie mobile (3) de ladite structure dans ladite position opérationnelle surélevée.

15. Dispositif de sécurité tel que revendiqué dans une quelconque des revendications 1 à 14, où lesdits moyens de détection sont montés sur la structure de support à travers un dispositif anti-vibrations.

16. Machine agricole (T) ayant un compartiment pour un opérateur et une partie avant qui est positionnée avant ledit compartiment, où ladite machine agricole comprend dispositif de sécurité de protection contre les écrasements selon une quelconque des revendications 1 à 15, grâce à quoi
- ladite partie mobile est positionnée sur ladite partie avant de la machine agricole (T) lorsque ladite partie mobile (3) de ladite structure de support est dans la position de repos rétractée.
